(19) Europäisches Patentamt
European Patent Office
Office européen des brevets

(11) Publication number: **0 286 596 B1**

(12) # EUROPEAN PATENT SPECIFICATION

(45) Date of publication of patent specification: **21.06.95**

(51) Int. Cl.[6]: **C08K 5/32**, C08L 9/00, C08L 25/04, C08L 81/02, C07C 239/00

(21) Application number: **88810220.9**

(22) Date of filing: **31.03.88**

(54) **Use of n,n-dialkylhydroxylamines and their preparation.**

(30) Priority: **10.04.87 US 36939**

(43) Date of publication of application:
**12.10.88 Bulletin 88/41**

(45) Publication of the grant of the patent:
**21.06.95 Bulletin 95/25**

(84) Designated Contracting States:
**BE CH DE ES FR GB IT LI NL**

(56) References cited:
**EP-A- 0 138 767**
**US-A- 3 222 334**

**"Römpp Chemie Lexikon, 9.Auflage, S. 3559**

(73) Proprietor: **CIBA-GEIGY AG**
**Klybeckstrasse 141**
**CH-4002 Basel (CH)**

(72) Inventor: **Ravichandran, Ramanathan**
**111 De Haven Drive**
**Apt. 125**
**Yonkers**
**New York 10703 (US)**

Inventor: **Patel, Ambelal R.**
**114 Huntley Drive**
**Ardsley**
**New York 10502 (US)**
Inventor: **Cortolano, Frank P.**
**3 East Maple Street**
**Valhalla**
**New York 10595 (US)**
Inventor: **Thomas, Richard W.**
**74 Moutainview Avenue**
**Nutley**
**New Jersey 07110 (US)**
Inventor: **Pastor, Stephen D.**
**Neuensteinerstrasse**
**CH-4053 Basle (CH)**
Inventor: **Odorisio, Paul**
**31 Columbia Terrace**
**Edgewater**
**New Jersey 07020 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention pertains to the use of long chain N,N-dialkylhydroxylamines for stabilizing specific organic materials against thermal, oxidative or actinic degradation, to the stabilized compositions and to the preparation of those hydroxylamines.

U.S. Patent No. 4,590,231 describes the use of hydroxylamines as process stabilizers in the presence of costabilizers, such as phenolic antioxidants, in polyolefin compositions.

U.S. Patent Nos. 4,434,122 and 4,543,224 describe the stabilization of arylene sulfide resins using phenolic amide or ester-base antioxidants.

Evidence that the stabilization of arylene sulfide polymers has been a problem for a long time is seen by the many attempts to find an adequate stabilizer for the processing of the resins. U.S. Patent No. 4,405,745 describes the use of alkaline earth nitrites; U.S. Patent No. 4,411,853 teaches the use of dialkyltin dicarboxylates; U.S. Patent No. 4,412,062 describes the use of phosphites, phenolic antioxidants and thiophthalimides; U.S. Patent No. 4,413,081 teaches the use of Group 8 metal dihydrocarbyldithiocarbamates; U.S. Patent No. 4,418,029 describes the use of Group IIA or IIB metal salts of fatty acids; and U.S. Patent No. 4,478,969 teaches the use of aminotriazoles as stabilizers for the arylene sulfide resins.

U.S. Patent No. 3,432,578 describes the stabilization of conjugated diene polymers against the adverse effects of ultraviolet light by use of diarylhydroxylamines or of diaralkylhydroxylamines.

U.S. Patent No. 3,408,422 describes the stabilization of unsaturated polyester compositions using various N,N-dialkylhydroxylamines.

U.S. Patent No. 3,644,244 describes the use of hydroxylamines including the N,N-dialkylhydroxylamines as stabilizers to prevent the gelation of organosols of butadiene/acrylonitrile graft copolymers.

U.S. Patent No. 4,242,224 describes the use of N,N-dialkylhydroxylamines to reduce or retard the pink discoloration found in amine antioxidant and antiozonant emulsions used in the rubber industry.

U.S. Patent No. 4,316,996 pertains to the use of N,N-dialkylhydroxylamine compounds which can prevent the discoloration of phenolic antioxidants in rubber compositions.

U.S. Patent No. 4,547,532 pertains to the use of N,N-dialkylhydroxylamines to prevent the premature increase in viscosity of polymer-based antifouling paints containing an organotin compound.

U.S. Patent No. 4,409,408 discloses the use of N,N-dialkylhydroxylamines and tertiary alkylcatechols in stabilizing vinyl aromatic compounds, such as styrene, against premature polymerization.

U.S. Patent Nos. 3,222,334 and 3,341,487 describe N,N-dialkylhydroxylamines as short-stopping agents for emulsion polymerizations.

U.S. Patent No. 4,298,678 describe photosensitive compositions comprising a photooxidant, leuco dye, a substituted hydroxylamine and optionally a polymeric binder, e.g. a synthetic rubber.

Several reviews of the general methods of the preparation of N,N-dialkylhydroxylamines are available, e.g. S. Wawzonek et al, Organic Preparations and Procedures Int. 4(3), 135 (1972); and J.S. Roberts, Comprehensive Organic Chem., Ed. Sir D. Barton and W.D. Ollis, Chapter 6.4, p. 185 (1979). Both of these reviews point out the facile Cope reaction involving the pyrolysis of an amine oxide to give an olefin and concomitantly a hydroxylamine.

Wawzonek et al describe the direct oxidation of secondary dialkylamines to the corresponding hydroxylamines using hydrogen peroxide, but point out the over-oxidation, low yields and other difficulties encountered.

British Patent No. 1,134,851 describes preparing N,N-dialkylhydroxylamines by oxidizing a tertiary amine with hydrogen peroxide to form the N-oxide in the presence of water, removing the water by azeotropic distillation and pyrolyzing the residue to form an olefin and the hydroxylamine.

A.C. Cope et al, Organic Reactions, Vol. 11, Chapter 5, 317 (1960) describe the preparation of olefins from amines, the Hofmann elimination reaction and the pyrolysis of amine oxides.

U.S. Patent No. 3,274,252 discloses the process for the aqueous oxidation of a tri(lower alkyl)amine with hydrogen peroxide in the presence of an alkali metal tungstate catalyst and alkali metal pyrophosphate to give the corresponding amine oxide followed by pyrolysis of the aqueous reaction mass to give the corresponding N,N-di(lower alkyl)hydroxylamine.

U.S. Patent No. 3,709,942 discusses the preparation of N,N-dimethylhydroxylamine by the pyrolysis of aqueous alkyldimethylamine oxide.

U.S. Patent No. 3,293,034 describes the preparation of various N,N-di(lower alkoxyalkyl)hydroxylamines by the oxidation of the corresponding secondary amine with hydrogen peroxide. Control of the reaction is difficult and the products are isolated by vacuum distillation in low yields.

U.S. Patent No. 3,467,711 describes a process for preparing various N,N-di(lower alkoxyalkyl)-hydroxylamines by the oxidation of the corresponding secondary amine with aqueous hydrogen peroxide in

the presence of a metal sequestering agent such as ethylene diamine tetraacetic acid.

M.A.T. Rogers, J. Chem. Soc., 1955, 769 describes the preparation of N,N-dialkylhydroxylamines by a reverse Michael reaction on the N-oxides of the corresponding β-dialkylaminopropionic esters or nitriles or selected Mannich bases under alkaline conditions. Said N-oxides are prepared by oxidation of the corresponding β-dialkylamino compounds using monoperphthalic acid.

Rogers also describes the pyrolysis of tertiary amine oxides to give N,N-dialkylhydroxylamines.

Further Rogers points out that the direct oxidation of secondary amines by hydrogen peroxide is quite unsuitable which is not surprising in view of the strong reducing properties of hydroxylamines which are formed in the presence of hydrogen peroxide.

The present invention relates to a composition comprising an organic material subject to thermal, oxidative or actinic degradation and at least one compound of the formula (I)

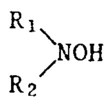

(I)

wherein $R_1$ and $R_2$ are independently dodecyl, tetradecyl, hexadecyl, heptadecyl or octadecyl, characterized in that the organic material is a poly(arylene sulfide) resin, a modified polystyrene or a polymer containing a diene component.

Compounds of the formula (I) wherein $R_1$ and $R_2$ are each dodecyl, tetradecyl, hexadecyl or octadecyl are also preferred.

Those compounds of the formula (I) wherein $R_1$ is hexadecyl and $R_2$ is tetradecyl, heptadecyl or octadecyl are of interest.

Compounds of the formula (I) wherein $R_1$ is heptadecyl and $R_2$ is octadecyl are also of interest.

Compounds of the formula (I) wherein $R_1$ and $R_2$ are octadecyl are of special interest.

According to a further preferred embodiment the radicals $R_1$ and $R_2$ are the alkyl mixture found in di(hydrogenated tallow)amine.

A typical di(hydrogenated tallow)amine has the following distribution of alkyl substituents:

| $R_1R_2NH$ | | |
|---|---|---|
| $R_1$ | $R_2$ | % |
| $C_{16}$ | $C_{14}$ | 1.9 |
| $C_{16}$ | $C_{16}$ | 12.4 |
| $C_{16}$ | $C_{17}$ | 2.8 |
| $C_{16}$ | $C_{18}$ | 36.0 |
| $C_{17}$ | $C_{18}$ | 3.9 |
| $C_{18}$ | $C_{18}$ | 39.0 |
| other | | 4.0 |

It is clear that the di(hydrogenated tallow)amine originating from animal sources may well vary somewhat in the specific distribution of alkyl substituents, but the di(hydrogenated tallow)amine contains major amounts of N,N-dihexadecylamine, N,N-dioctadecylamine and N-hexadecyl-N-octadecylamine. The individual components of the mixture can be separated by distillation under high vacuum.

However, for the purposes of this invention, there is no need to carry out such separation and the hydroxylamines prepared from the di(hydrogenated tallow)amine represent a preferred embodiment.

The hydroxylamines of the formula (I) are excellent process stabilizers for poly(arylene sulfide) resin, modified polystyrene and polymers containing a diene component. In general, it is advantageous to add 0.05 to 5 %, preferably 0.10 to 2 % by weight of the compound of the formula (I), relative to the material to be stabilized. The hydroxylamines of the formula (I) are conveniently incorporated into the material to be stabilized after polymerization.

The poly(arylene sulfide) resin used in the instant compositions is normally a solid, heat curable, high molecular weight polymer that can be formed into fiber or film. The arylene sulfide polymers useful in the instant invention include those having a melt flow index of at least about 20 g/10 min and generally in the range of about 50 to about 400 g/10 min and higher (determined by the method of ASTM D 1238-70, modified to a temperature of 316 °C, using a 5 kg weight). Thus, the arylene sulfide polymers can be linear,

branched or lightly crosslinked. Although the method by which these polymers are produced is not critical, they are preferably made by use of polyhalo aromatic compounds, alkali metal sulfides and organic amides.

The preferred arylene sulfide polymer is poly(p-phenylene sulfide).

Because of the use of high processing temperatures to shorten polymer dwell time in the processing equipment and to improve productivity puts, a process stabilizer is added to prevent a change in polymer viscosity which is indicative of undesired crosslinking, gel formation, chain extension or thermo-oxidative degradation. As already mentioned above, the hydroxylamines of the formula (I) are excellent process stabilizers for poly(arylene sulfide) which is conveniently processed at elevated temperatures of 300° to 425°C.

The modified polystyrene used in the instant compositions is preferably impact polystyrene (IPS).

In the compositions of the invention the polymers containing a diene component are polymers obtained by polymerization of a diene compound or copolymerization including graft or block copolymerization of a diene compound with other monomers.

Those compositions are preferred, wherein the polymer containing a diene component is an elastomer, e.g. polybutadiene, polyisoprene, ethylene/propylene/diene terpolymer, isoprene/isobutylene copolymer or acrylonitrile/butadiene copolymer. Polybutadiene, e.g. a low cis content polybutadiene as available, for example, from Firestone as ®Diene 55, is preferred.

Preferred compositions are also those, wherein the polymer containing a diene component is a styrene copolymer, a styrene block copolymer or a styrene terpolymer. Examples are styrene/butadiene copolymer, styrene/butadiene block copolymer, styrene/isoprene copolymer, styrene/isoprene block copolymer or acrylonitrile/butadiene/styrene (ABS).

The styrene block copolymer can be e.g. a thermoplastic elastomer, in particular styrene/butadiene block copolymer or styrene/isoprene block copolymer, such as those available as ®Kraton from Shell.

The styrene block copolymer can also be a resin, e.g. the styrene/butadiene block copolymer as available, for example, as ®K-resin from Phillips.

Styrene/butadiene copolymers such as those which are available as ®Stereon from Firestone are also preferred.

During the high temperature, high shear processing of polymers containing a diene component, said polymers are susceptible to oxidative crosslinking which manifests itself in the formation of unwanted gel particles. These gel particles are particularly detrimental in elastomers used to modify thermoplastics such as polystyrene, polyolefins and other resins to impart enhanced impact strength. Gel particles lower polymer clarity and lead to "fisheyes" in the finished article.

Generally a combination of a phenolic antioxidant and a phosphite are used to control gel formation in these polymers during high temperature processing. European Patent Application No. 79,806 describes the stabilization of such polymers using a phenolic antioxidant and a thio synergist. While such phenolic antioxidants suppress gel formation, the stabilized elastomer is susceptible to color formation on exposure to both ultraviolet and gamma irradiation. Since high levels of phosphite must be used in such systems, the relatively unstable phosphites often lead to the formation of "black specks" during high temperature processing. The phenolic antioxidants which are unstable to ultraviolet and gamma irradiation offer minimal suppression to gel formation.

When the phenolic antioxidant and all or part of the phosphite is replaced by e.g. from 0.05 to 1.0 % by weight, preferably 0.1 to 0.25 % by weight, based on the modified polystyrene or the polymer containing a diene component, of a long chain N,N-dialkylhydroxylamine of the formula (I), both the suppression of gel formation and resistance to discoloration are achieved. It is preferred to use from 0 to 1.0 % by weight, based on the polymer, of a phosphite concomitantly. A preferred phosphite is tris[nonylphenyl] phosphite or tris[2,4-di-tert-butyl-phenyl] phosphite.

The present invention also relates to the use of a compound of the formula (I) for stabilizing a poly(arylene sulfide) resin, a modified polystyrene or a polymer containing a diene component against thermal, oxidative or actinic degradation.

The instant compositions do not include photosensitive compositions comprising a hydroxylamine as described in U.S. Patent No. 4,298,678.

A further object of the instant invention is an improved process for the preparation of N,N-dialkylhydroxylamines of the formula (I). Accordingly, the present invention also pertains to a process for the preparation of a compound of the formula (I)

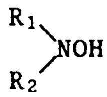

(I)

wherein $R_1$ and $R_2$ are independently alkyl of 8 to 36 carbon atoms, by reacting a compound of the formula (II)

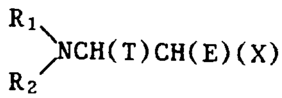

(II)

wherein $R_1$ and $R_2$ are as defined above, E is hydrogen, alkyl of 1 to 4 carbon atoms or ($C_1$-$C_{12}$alkyl)-oxycarbonylmethyl, X is ($C_1$-$C_{12}$alkyl)oxycarbonyl, -CN, -$CONR_3R_4$,

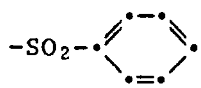

or -$PO(OC_2H_5)_2$, where $R_3$ and $R_4$ are independently hydrogen or alkyl of 1 to 4 carbon atoms, and T is hydrogen or ($C_1$-$C_{12}$alkyl)oxycarbonyl, or T and X together are -CO-N(L)-CO- where L is hydrogen, alkyl of 1 to 4 carbon atoms or phenyl, with an aqueous hydrogen peroxide solution at a temperature of 15° to 50°C to give the corresponding N-oxide of the formula (III)

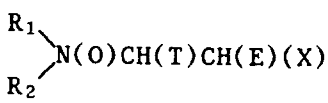

(III)

which undergoes the reverse Michael reaction in situ to give the compound of the formula (I) and the compound of the formula (IV),

TCH = C(E)(X)     (IV)

characterized in that the compound of the formula (II) is dissolved in a lower alkanol solvent and oxidized with a molar excess of a 10 to 70 % aqueous hydrogen peroxide solution and that the compound of the formula (I) precipitates from the aqueous lower alkanol reaction medium.

The starting compound of the formula (II) is conveniently prepared by the Michael addition of a secondary dialkylamine to an alpha,beta-unsaturated compound under the influence of heat.

The dialkylamines and the alpha,beta-unsaturated compounds are largely items of commerce or can be prepared by conventional methods.

The meanings of the radicals T, E, and X depend on the nature of the alpha,heta-unsaturated compound used to prepare the starting Michael addition material.

When the alpha,beta-unsaturated compound is an acrylate, methacrylate or related ester, E is hydrogen or alkyl of 1 to 4 carbon atoms, preferably methyl, T is hydrogen and X is ($C_1$-$C_{12}$alkyl)oxycarbonyl.

The acrylates where E and T are each hydrogen and X is ($C_1$-$C_8$lkyl)oxycarbonyl are the preferred alpha,beta-unsaturated compounds.

When the alpha,beta-unsaturated compound is an itaconate, T is hydrogen, E is ($C_1$-$C_{12}$alkyl)-oxycarbonylmethyl and X is ($C_1$-$C_{12}$alkyl)oxycarbonyl.

When the alpha,beta-unsaturated compound is an acrylonitrile or methacrylonitrile, T is hydrogen, E is hydrogen or methyl and X is -CN.

When the alpha,beta-unsaturated compound is an acrylamide or methacrylamide, T is hydrogen, E is hydrogen or methyl and X is -$CONR_3R_4$ where $R_3$ and $R_4$ are independently hydrogen or alkyl of 1 to 4 carbon atoms, preferably methyl.

When the alpha,beta-unsaturated compound is diethyl vinylphosphonate, T is hydrogen, E is hydrogen and X is $-PO(OC_2H_5)_2$.

When the alpha,beta-unsaturated compound is phenyl vinyl sulfone, T is hydrogen, E is hydrogen and X is

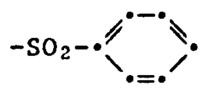

When the alpha,beta-unsaturated compound is a maleate or fumarate, preferably a maleate, E is hydrogen and T and X are ($C_1$-$C_{12}$alkyl)oxycarbonyl.

When the alpha,beta-unsaturated compound is a maleimide, E is hydrogen and T and X together are -CO-N(L)-CO- where L is hydrogen, phenyl or alkyl of 1 to 4 carbon atoms, e.g. methyl, ethyl, propyl or butyl.

Examples of ($C_1$-$C_{12}$alkyl)oxycarbonylmethyl are methoxycarbonylmethyl, ethoxycarbonylmethyl, n-butoxycarbonylmethyl, n-amyloxycarbonylmethyl, 2-ethylhexyloxycarbonylmethyl, decyloxycarbonylmethyl or dodecyloxycarbonylmethyl. ($C_1$-$C_8$alkyl)oxycarbonylmethyl is preferred.

Examples of ($C_1$-$C_{12}$alkyl)oxycarbonyl are methoxycarbonyl, ethoxycarbonyl, n-butoxycarbonyl, n-amyloxycarbonyl, 2-ethylhexyloxycarbonyl, decyloxycarbonyl or dodecyloxycarbonyl. ($C_1$-$C_8$alkyl)-oxycarbonyl is preferred.

The instant process is carried out under mild conditions at a temperature of 15° to 50°C, preferably at ambient temperature, most preferably at 23° to 25°C.

The oxidant in the instant process is aqueous 10 to 70 % hydrogen peroxide, preferably a 50 to 70 % aqueous hydrogen peroxide solution. A molar excess of hydrogen peroxide, e.g. up to a threefold molar excess with reference to the compound of the formula (II), can be used to assure complete conversion of the Michael addition product to the corresponding N-oxide without fear of over-oxidation of the N-oxide.

The key aspect of the instant invention upon which the improved process is focused involves the relative solubilities of the N-oxide formed during the oxidation step and of the N,N-dialkylhydroxylamine formed therefrom when the reverse Michael addition occurs.

By picking the proper reaction medium, the starting Michael addition material (i.e. the substituted ethylamine) and its corresponding N-oxide are rendered soluble in the reaction medium. However, when the reverse Michael reaction occurs with the N-oxide intermediate in situ, the corresponding long chain, N,N-dialkylhydroxylamine is rendered insoluble in the reaction medium and begins to precipitate from the reaction medium.

This precipitation of desired product not only protects said product from unwanted over-oxidation problems, but also facilitates its isolation and purification.

The N,N-dialkylhydroxylamines of the formula (I) are obtained in high yield and purity by mere filtration of the reaction mixture. Still further purification by recrystallization can be carried out if needed.

It is thus clear that the choice of reaction medium is critical for the benefits of the instant improved product to be achieved. The important criteria are solubility of the compound of the formula (II) and its corresponding N-oxide in the reaction medium and the concomitant insolubility of the corresponding N,N-dialkylhydroxylamine in the same reaction medium. There will clearly be some minor variation in choice of reaction medium depending on which alpha,beta-unsaturated compound was originally used to prepare said ethylamine starting material.

Since aqueous hydrogen peroxide solution is used as the oxidant and since water is present from this source as well as the by-product of the oxidation itself, a solvent with at least some water miscibility or solubility is desirable.

The lower alkanols are the reaction medium solvents of choice such as e.g. methanol, ethanol, n-propanol, isopropanol, n-butanol, isobutanol, sec-butanol and tert-butanol. The most preferred solvent is n-butanol.

In addition, the butyl alcohols, particularly n-butanol, provide a unique balance between water miscibility which is required to carry out the oxidation of the compound of the formula (II) while allowing for a convenient phase separation between the aqueous phase and the organic solvent phase of the reaction mixture. The phase separation allows for recycling of the starting materials which may then be recovered from the reaction filtrate. This unique two phase system allows for the safe removal of spent hydrogen peroxide and water. The n-butanol solution of amine may then be recycled using freshly added hydrogen peroxide.

Another object of the invention is a further improved process for preparing compounds of the formula (I). Therefore, the present invention also pertains to a process for the preparation of a compound of the formula (I)

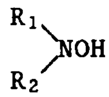

(I)

wherein $R_1$ and $R_2$ are independently alkyl of 8 to 36 carbon atoms, by oxidizing a compound of the formula (V)

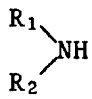

(V)

wherein $R_1$ and $R_2$ are as defined above, with an aqueous hydrogen peroxide solution at a temperature of 40° to 65°C, characterized in that the compound of the formula (V) is dissolved in a lower alkanol solvent and oxidized with a molar excess of a 10 to 70 % aqueous hydrogen peroxide solution and that the compound of the formula (I) precipitates from the aqueous lower alkanol reaction medium.

The instant process is carried out under mild conditions at a temperature of 40° to 65°C, preferably at 50° to 60°C.

The oxidant in the instant process is 10 to 70 % aqueous hydrogen peroxide, preferably a 50 to 70 % aqueous hydrogen peroxide solution. A molar excess of hydrogen peroxide, e.g. up to a threefold molar excess with reference to the compound of the formula (V), can be used to assure complete conversion of the secondary amine to the corresponding N,N-dialkylhydroxylamine without fear of over-oxidation of the product.

The key aspect of the instant invention upon which the improved process is focused involves a facile method of preventing over-oxidation of the N,N-dialkylhydroxylamine formed. This occurs because of the relative solubilities of the starting secondary dialkylamine and the product formed during the oxidation reaction when it is carried out in an aqueous lower alkanol reaction medium.

The secondary dialkylamine is soluble in the reaction medium, but the corresponding long-chain N,N-dialkylhydroxylamine formed is insoluble in the reaction medium and precipitates from the reaction medium as it is formed.

This precipitation of desired product not only protects said product from unwanted over-oxidation problems, but also facilitates its isolation and purification.

The instant N,N-dialkylhydroxylamines are obtained in high yield and purity by mere filtration of the reaction mixture. Still further purification by recrystallization can be carried out if needed.

It is thus clear that the choice of reaction medium is critical for the benefits of the instant improved process to be achieved. The important criteria are solubility of long chain secondary dialkylamine in the reaction medium and the concomitant insolubility of the corresponding N,N-dialkylhydroxylamine in the same reaction medium. There will clearly be some minor variation in choice of reaction medium depending on which specific long chain dialkylamine is used.

Since aqueous hydrogen peroxide solution is used as the oxidant and since water is present from this source as well as the by-product of the oxidation itself, a solvent with at least some water miscibility or solubility is desirable.

The lower alkanols are the reaction medium solvents of choice such as e.g. methanol, ethanol, n-propanol, isopropanol, n-butanol, isobutanol, sec-butanol and tert-butanol. The most preferred solvents are n-butanol and tert-butanol.

In addition, the butyl alcohols, particularly n-butanol, provide a unique balance between water miscibility which is required to carry out the oxidation of the long chain N,N-dialkylamines while allowing for a convenient phase separation between the aqueous phase and the organic solvent phase of the reaction mixture. The phase separation facilitates recycling of the starting materials which may be recovered from the reaction filtrate.

The starting materials are largely items of commerce or can be prepared by conventional methods.

Example 1: Methyl 3-[di(hydrogenated tallow)amino]propionate

A mixture of 49.4 g (0.1 mol) of di(hydrogenated tallow)amine (eq. wt. of 494 g/mol) and 9 ml (0.1 mol) of methyl acrylate are heated to reflux. Upon completion of the addition reaction, as determined by the complete disappearance of the starting amine by thin layer chromatography (TLC) analysis, the mixture is cooled. The volatiles are removed in vacuo to give 54.4 g (94 % yield) of the above-named product as a yellow oil.

IR (methylene cloride) $V_{c=o}$ 1735 $cm^{-1}$.

| Analysis: | | | |
|---|---|---|---|
| Calculated for $C_{38}H_{77}NO_2$: | C, 78.7; | H, 13.4; | N, 2.4. |
| Found: | C, 78.8; | H, 13.4; | N, 2.4. |

Example 2: N,N-di(hydrogenated tallow)hydroxylamine

Into a solution of 29 g (0.05 mol) of the product of Example 1 in 200 ml of isopropanol is added 2.4 ml (0.063 mol) of 70 % aqueous hydrogen peroxide solution. After stirring at 23-25 °C for 1 hour, an additional 1.2 ml (0.031 mol) of a 70 % aqueous hydrogen peroxide solution is added. After stirring for another 1 hour at 23-25 °C, another additional 1.2 ml (0.031 mol) of 70 % aqueous hydrogen peroxide is added. After a total of 18 hours stirring at 23-25 °C, the product is isolated by filtration and washed with isopropanol to give 20.9 g (82 % yield) of white solid melting at 88-90 °C.

The product (19 g) is recrystallized from 300 ml of isopropanol to give 13.1 g (69 % recovery) of the above-named product as a white solid melting at 93-95 °C.

| Analysis: | | | |
|---|---|---|---|
| Calculated for $C_{34}H_{71}NO$: | C, 80.1; | H, 14.0; | N, 2.8. |
| Found: | C, 80.0; | H, 14.3; | N, 2.9. |

Example 3: 2-Ethylhexyl 3-[di(hydrogenated tallow)amino]propionate

Following the general procedure of Example 1, 52.2 g (0.105 mol) of di(hydrogenated tallow)amine (eq. wt. of 494 g/mol) and 18.4 g (0.1 mol) of 2-ethylhexyl acrylate are reacted. The reaction product is purified by high pressure liquid chromatography (HPLC) using hexane and ethyl acetate solvents on silica gel to give 40.6 g (60 % yield) of the above-named product as a colorless oil.

IR (methylene cloride) $V_{c=o}$ 1735 $cm^{-1}$.

Example 4: N,N-Di(hydrogenated tallow)hydroxylamine

Using the general procedure of Example 2, 29.7 g (0.044 mol) of the product of Example 3 in 125 ml of isopropanol is oxidized using 2.5 ml (0.065 mol) of 70 % aqueous hydrogen peroxide to yield 16.3 g (73 % yield) of the above-named product as a white solid melting at 93-96 °C.

From the HPLC purification, using hexane and ethyl acetate solvents, of the filtrate, 4.4 g (48 % yield) of 2-ethylhexyl acrylate is recovered.

Example 5: Methyl 3-(didodecylamino)propionate

Following the general procedure of Example 1, 75 g (0.21 mol) of didodecylamine and 19.1 ml (0.21) of methyl acrylate are reacted to give 92.6 g (quantitative yield) of the above-named product as a yellow oil.

This oil (5.0 g) is purified by column chromatography using hexane and ethyl acetate solvents on silica gel to give 4.9 g (98 % recovery) of a colorless oil.

| Analysis: | | | |
|---|---|---|---|
| Calculated for $C_{28}H_{57}NO_2$: | C, 76.5; | H, 13.1; | N, 3.2. |
| Found: | C, 76.6; | H, 13.0; | N, 3.1. |

Example 6: N,N-Didodecylhydroxylamine

Using the general procedure of Example 2, 87.6 g (0.2 mol) of the product of Example 5 in 800 ml of isopropanol is oxidized using 9.7 ml (0.25 mol) of 70 % aqueous hydrogen peroxide solution to give 32.1 g (44 % yield) of the above-named product as a white solid melting at 85-86 °C.

| Analysis: | | | |
|---|---|---|---|
| Calculated for $C_{24}H_{51}NO$: | C, 78.0; | H, 13.9; | N, 3.8. |
| Found: | C, 78.4; | H, 13.5; | N, 3.7. |

Example 7: Methyl 3-(ditetradecylamino)propionate

Following the general procedure of Example 1, 50.4 g (0.123 mol) of ditetradecylamine and 11.1 ml (0.123 mol) of methyl acrylate are reacted to give 62.6 g (quantitative yield) of the above-named product as a yellow oil.

This oil (5.0 g) is purified by column chromatography using hexane and ethyl acetate solvents on silica gel to give 4.9 g of a colorless oil.

| Analysis: | | | |
|---|---|---|---|
| Calculated for $C_{32}H_{65}NO_2$: | C, 77.5; | H, 13.2; | N, 2.8. |
| Found: | C, 77.8; | H, 13.4; | N, 3.0. |

Example 8: N,N-Ditetradecylhydroxylamine

Using the general procedure of Example 2, 57.5 g (0.116 mol) of the product of Example 7 in 450 ml of isopropanol is oxidized using 5.6 ml (0.15 mol) of 70 % aqueous hydrogen peroxide solution to give 21.5 g (44 % yield) of the above-named product as a white solid melting at 94-96 °C.

| Analysis: | | | |
|---|---|---|---|
| Calculated for $C_{28}H_{59}NO$: | C, 79.0; | H, 14.0; | N, 3.3. |
| Found: | C, 79.2; | H, 14.0; | N, 3.2. |

Example 9: N,N-Di(hydrogenated tallow)hydroxylamine

Into a solution of 100 g (0.18 mol) of di(hydrogenated tallow)amine (494 eq. wt., 90 % secondary amine) in 400 ml of n-butanol at 55 °C is added 8.6 ml (0.22 mol) of 70 % aqueous hydrogen peroxide solution. The reaction is complete when all the hydrogen peroxide is consumed as determined by titration of an aliquot of the reaction mixture with potassium iodide/sulfuric acid/sodium thiosulfate.

The above-named product is isolated from the reaction mixture by filtration. The filter cake is washed with two 50 ml portions of n-butanol at 55 °C; then dried to give the desired product in a yield of 63 g (68 %) as a white solid melting at 93-96 °C.

Example 10: N,N-Di(hydrogenated tallow)hydroxylamine

Following the general procedure of Example 9, to a solution of 52.6 g (0.09 mol) of di(hydrogenated tallow)amine (526 eq. wt., 90 % secondary amine) dissolved in 200 ml of n-butanol at 55 °C is added 5.3 ml (0.14 mol) of 70 % aqueous hydrogen peroxide solution. During the course of the reaction three additional 0.5 ml (0.01 mol) portions of 70 % aqueous hydrogen peroxide solution are added after 22, 24 and 72 hours.

The progress of the reaction is followed by thin layer chromatography (TLC) (silica gel; chloroform/acetic acid 98/2). The reaction is complete when all the starting amine has disappeared as determined by the TLC analysis.

The above-named product is isolated from the reaction mixture by filtration. The filter cake is washed with 100 ml of n-butanol at 55 °C, and then with two 200 ml portions of methanol at ambient temperature to give the desired product in a yield of 27.6 g (57 %) as a white solid melting at 98-100 °C.

Example 11: N,N-Di(hydrogenated tallow)hydroxylamine

Following the general procedure of Example 9, to 200 g (0.36 mol) of di(hydrogenated tallow)amine (494 eq. wt., 90 % secondary amine) suspended in 800 ml of ethanol at 55 °C is added 29.4 ml (0.77 mol) of 70 % aqueous hydrogen peroxide solution. After stirring for 18 hours at 55 °C, the reaction mixture is filtered and the moist filter cake is recrystallized from 1000 ml of hexane. The recrystallized material is washed with 500 ml of hexane at 55 °C. The above-named product is obtained in a yield of 123 g (66 %) as a white solid melting at 90-93 °C.

Example 12: N,N-Dihexadecylhydroxylamine

The general procedure of Example 11 is followed using 100 g (0.19 mol) of dihexadecylamine (451 eq. wt., 88 % secondary amine), 30.2 (0,44 mol) of 50 % aqueous hydrogen peroxide solution and 400 ml of ethanol. After stirring for 48 hours, the reaction mixture is filtered to give the above-named product which is twice recrystallized from 500 ml of chloroform. The desired product is obtained in a yield of 29.4 g (32 %) as white needles melting at 97-99 °C.

| Analysis: | | | |
|---|---|---|---|
| Calculated for $C_{32}H_{67}NO$: | C, 79.8; | H, 14.0; | N, 2.0. |
| Found: | C, 79.5; | H, 14.0; | N, 2.7. |

Example 13: N,N-Didodecylhydroxylamine

Following the general procedure of Example 12, to a solution of 50 g (0.14 mol) of didodecylamine dissolved in 200 ml of n-propanol at 40 °C is added dropwise 9.62 g (0.14 mol) of 50 % aqueous hydrogen peroxide solution. After 72 hours at 40-45 °C, the reaction mixture is filtered to give a crude product which is subsequently recrystallized from 300 ml of hexane. The above-named product is obtained in a yield of 24.8 g (48 %) as white needles melting at 90-92 °C.

| Analysis: | | | |
|---|---|---|---|
| Calculated for $C_{24}H_{51}NO$: | C, 78.0; | H, 13.9; | N, 3.8. |
| Found: | C, 78.0; | H, 14.2; | N, 3.7. |

Example 14: N,N-Ditetradecylhydroxylamine

The general procedure of Example 12 is followed using at 50° to 55 °C 50 g (0.12 mol) of ditetradecylamine, 200 ml of n-propanol and 8.3 g (0.12 mol) of 50 % aqueous hydrogen peroxide solution. The above-named product is obtained in a yield of 33.4 g (64 %) as white needles melting at 97-99 °C.

Example 15: This example illustrates the variety of conditions which may be useful in the oxidation of di(hydrogenated tallow)amine to N,N-di(hydrogenated tallow)hydroxylamine without over-oxidation to the corresponding nitrone.

A 25 % wt/vol suspension of di(hydrogenated tallow)amine (494 eq. wt.; 90 % secondary amine) in an alcohol solution is treated with the indicated equivalents of aqueous hydrogen peroxide solution and at the indicated temperature. After the indicated time, the reaction mixture is cooled and the product mixture isolated by filtration. The composition of the dried product mixture is determined by inspection of its XL 200 $^1$H NMR spectrum. The results are tabulated below.

Table 1

| Alkanol | Equivalents of Aqueous $H_2O_2$ | Temp. | Time | Relative Mole Ratio by $^1$H NMR*) Hydroxylamine/Amine/Nitrone |
|---|---|---|---|---|
| Methanol | 2.1 | 60 ° C | 24 h | 50 / 50 / <5 |
| Ethanol | 2.0 | 55 ° C | 5 h | 50 / 50 / <5 |
| Isopropanol | 1.0 | 60 ° C | 4 h | 40 / 60 / <5 |
| n-Butanol | 1.0 | 50 ° C | 24 h | 70 / 30 / <5 |
| tert-Butanol | 1.0 | 65 ° C | 48 h | 90 / 10 / <5 |

*) Limits of detection are approximately 5 mol % and the value of less than 5 mol % is assigned to a component, if it is not detected in the $^1$H NMR spectrum.

Example 16: N,N-Di(hydrogenated tallow)hydroxylamine

Into a warm solution of 49.5 g of di(hydrogenated tallow)amine (494 eq. wt.; 90 % secondary amine; 0.09 mol) in 200 ml of n-butanol at 54° to 55°C is added 6.8 g (0.1 mol) of 50 % aqueous hydrogen peroxide solution. After 6 hours at 54° to 55°C, the reaction mixture is filtered through a fritted glass funnel while the reaction mass is warm. The reaction filtrate is allowed to cool and is diluted with 400 ml of methanol. A second crop is collected from the diluted filtrate. Finally, the reaction filtrate is diluted with 400 ml of water and third crop is collected. The three reaction filter cakes are dried separately and analyzed by $^1$H NMR and LC. The results of the analysis are summarized in Table 2.

Table 2:

| Reaction Filter Cake | Isolated Yield (g) | Calculated Yields from LC (g) | | | Calculated Yields from ¹H NMR (g) | | |
|---|---|---|---|---|---|---|---|
| | | Hydroxylamine | Amine | Nitrone | Hydroxylamine | Amine | Nitrone |
| 1st | 32.5 | 23.1 | 7.2 | - | 26.5 | 5.9 | - |
| 2nd | 13.9 | 1.3 | 12.4 | - | - | 13.9 | - |
| 3rd | 3.1 | - | 0.71 | 0.56 | Undetermined | | |
| Total | 49.5 | 24.4 | 20.3 | 0.56 | 26.5 | 19.8 | - |
| Yield of Hydroxylamine: | | 53 % | | | 58 % | | |
| Yield of Hydroxylamine (based upon recovered starting secondary amine): | | 97 % | | | 96 % | | |

Example 17: Stabilization of Poly(phenylene sulfide)

Unstabilized poly(phenylene sulfide) (®Ryton #62515, Phillips Petroleum Co.) is dry blended with designated amount in parts per hundred weight (phr) of the test additive. 50 g of the blend of poly-

(phenylene sulfide) and additive are added to a Brabender Plasticorder which has been preheated to 325 °C for three minutes.

The Plasticorder is operated at 325 °C at 60 rpm in the Torque Range of 0 to 10 Nm and the increase in torque as a function of time is determined. The time for the measured torque to reach a value of 1.5 Nm above the minimum value is taken as the time required for undesired crosslinking and concomitant polymer degradation to begin.

The results are shown in Table 3. High numbers indicate a delay in the time required for poly-(phenylene sulfide) to thermally degrade and crosslink. Accordingly, high numbers indicate a good process stabilization.

Table 3

| Additive | Additive Concentration (phr) | Time (min) to Reach torque of 1.5 Nm over Minimum Torque |
|---|---|---|
| none | -- | 8.5 |
| N,N-Dioctylhydroxylamine **) | 1.0 | 32 |
| N,N-Didodecylhydroxylamine | 1.0 | 40 |
| N,N-Di(hydrogenated tallow)hydroxylamine *) | 1.0 | 39 |
| N,N-Dioctylhydroxylamine **) | 0.5 | 17.5 |
| N,N-Didodecylhydroxylamine | 0.5 | 20.75 |
| N,N-Di(hydrogenated tallow)hydroxylamine *) | 0.5 | 19 |
| N,N-Di(hydrogenated tallow)hydroxylamine *) | 2.0 | 69 |
| Combination neopentanetetrayl tetrakis[3,5-di-tert-butyl-4-hydroxyhydrocinnamate] / N,N-di(hydrogenated tallow)hydroxylamine*) | 0.5/0.5 | 28.5 |

*)Hydroxylamine of Example 9
**)comparison

Example 18: Stabilization of Poly(phenylene sulfide)

Following the general procedure of Example 17, but operating the Brabender Plasticorder at 375 °C, the ability of the test additives at a concentration of 1 % by weight to prevent the thermal degradation and crosslinking of poly(phenylene sulfide) under these still more rigorous higher temperature conditions is measured.

The results are shown in Table 4.

Table 4

| Additive | Time (min) to Reach Torque of 1.5 Nm over Minimum Torque |
|---|---|
| none | 5 |
| 1 % of N,N-dioctylhydroxylamine **) | 8 |
| 1 % of N,N-didodecylhydroxylamine | 10 |
| 1 % of N,N-di(hydrogenated tallow)hydroxylamine | 18 |
| (High values indicate good process stabilization) | |

** comparison

Example 19: Process Stabilization of Styrene/Butadiene Copolymer

A solution polymerized copolymer of styrene and butadiene with a butadiene content of about 24 % (®K-Resin, Phillips) is mixed in a Brabender Plasticorder for one minute at 250 °C. The copolymer contains 1.0 % by weight of tris[nonylphenyl] phosphite as added by the manufacturer. The stabilizer N,N-di-(hydrogenated tallow)hydroxylamine is dry blended into the styrene/butadiene copolymer at the indicated weight concentrations.

The Plasticorder is operated at 90 rpm in the Torque Range of 1 to 10 Nm, and the increase in torque as a function of time is determined. The time for the measured torque to increase 0.04 Nm above the minimum value is taken as the time needed to the onset of crosslinking.

The results are shown in Table 5.

Table 5

| Additive | Time (min) to Reach Torque of 0.04 Nm over Minimum Torque |
|---|---|
| 1 % of tris[nonylphenyl] phosphite | 12 |
| 1 % of tris[nonylphenyl] phosphite + 0.1 % of N,N-di(hydrogenated tallow)hydroxylamine | 30 |
| (High values indicate good process stabilization) | |

Example 20: Process Stabilization of Styrene/Butadiene Copolymer

Following the general method described in Example 19, the stabilizer additives are first incorporated into a solution of 100 g of the styrene/butadiene copolymer (®K-resin, Phillips) in 300 ml of cyclohexane and thoroughly mixed. The cyclohexane solvent is removed under reduced pressure at 40 °C to give the solid stabilized resin which is then treated in the Brabender Plasticorder as described in Example 19.

The time required for the onset of crosslinking is determined as in Example 19. Additionally, samples of each formulation are taken from the Plasticorder as soon as the stabilized polymer is thoroughly mixed. These samples are converted into plaques which are exposed to the Xenon Arc Weather-Ometer for 168 hours or exposed to gamma irradiation (Co 60, 4 Mrad exposure). The color as measured by the Hunter b value method for each sample is ascertained. Higher b color values indicate more color formation.

The results are shown in Table 6.

Table 6:

| Additive | Time (min) to Reach Torque of 0.04 Nm over Minimum Torque [1)] | Hunter b Color | |
|---|---|---|---|
| | | After 168 hours in Xenon Arc Weather-Ometer | After 4 Mrad gamma irradiation |
| 1 % of tris[nonylphenyl] phosphite | 12 | -- | -- |
| 1 % of tris[nonylphenyl] phosphite + 0.1 % of N,N-di(hydrogenated tallow) hydroxylamine | 33 | 4.1 | 7.5 |
| 1 % of tris[nonylphenyl] phosphite + 0.1 % of n-octadecyl 3,5-di-tert-butyl-4-hydroxyhydrocinnamate + 0.05 % of N,N-di(hydrogenated tallow) hydroxylamine | 29 | 3.8 | 8.1 |

1) High values indicate good process stabilization.

Example 21: Process Stabilization of Styrene/Butadiene Copolymer

Using the procedure described in Example 20 and using a different batch of styrene/butadiene copolymer (®K-resin, Phillips) which contained 0.5 % by weight of tris[nonylphenyl] phosphite as received, the time for onset of crosslinking and the colors developed after exposure to 168 hours in the Xenon Arc Weather-Ometer and after exposure to 2.5 Mrad of gamma irradiation are ascertained using polymer stabilized with a number of different stabilizer combinations.

The results are shown in Table 7.

Table 7:

| Additive | Time (min) to Reach Torque of 0.04 Nm over Minimum Torque 1) | Hunter b Color 2) | |
|---|---|---|---|
| | | After 168 hours in Xenon Arc Weather-Ometer | After 2.5 Mrad gamma irradiation |
| 0.5 % of tris[nonylphenyl] phosphite | 6.5 | 6.2 | 3.0 |
| 1 % of tris[nonylphenyl] phosphite | 10.5 | 6.2 | 3.6 |
| 0.5 % of tris[nonylphenyl] phosphite + 0.1 % of N,N-didodecylhydroxylamine | 18.5 | 6.2 | 3.4 |
| 1 % of tris[nonylphenyl] phosphite + 0.1 % of N,N-didodecylhydroxylamine | 22.6 | 5.3 | 3.7 |
| 0.5 % of tris[nonylphenyl] phosphite + 0.1 % of N,N-di(hydrogenated tallow) hydroxylamine | 17.5 | 5.2 | 3.7 |
| 1 % of tris[nonylphenyl] phosphite + 0.1 % of N,N-di(hydrogenated tallow) hydroxylamine | 21.0 | 6.0 | 3.8 |

1) High values indicate good process stabilization.

2) Higher b color values indicate more color formation.

Example 22: Process Stabilization of Polybutadiene

Following the general procedure of Example 20, unstabilized polybutadiene having a low cis content (®Diene 55, Firestone) is admixed with the indicated amount of the N,N-di(hydrogenated tallow)-hydroxylamine.

Samples (3 cm x 3 cm x 10 mm) are prepared from the polymer by compression molding (100 °C for 1 minute). The samples are placed in a 70 °C oven till the gel content reaches 15 % as measured by the weight of toluene insoluble material retained on a 40 mesh screen. The time required for this level of gel to be attained is measured in days.

The results are shown in Table 8.

Table 8

| Additive | Time to Reach Aging at 70 °C 15 % Gel on Oven (days) |
|---|---|
| none | 7 |
| 0.25 % of N,N-di(hydrogenated tallow)hydroxylamine | 22 |

Additionally the time to the onset of crosslinking in the Brabender Plasticorder at 190 °C is measured. The results are shown in Table 9.

Table 9

| Additive | Time (min) to Reach Torque of 0.04 Nm over Minimum Torque |
|---|---|
| none | 1.0 |
| 0.1 % of N,N-di(hydrogenated tallow) hydroxylamine | 7.0 |
| 0.25 % of N,N-di(hydrogenated tallow) hydroxylamine | 14.0 |
| 0.50 % of N,N-di(hydrogenated tallow) hydroxylamine | 22.0 |

The addition of the instant hydroxylamine to the polybutadiene dramatically increased the time required for crosslinking or for gelation to occur.

## Claims

## Claims for the following Contracting States : BE, CH, DE, FR, GB, IT, LI, NL

1. A composition comprising an organic material subject to thermal, oxidative or actinic degradation and at least one compound of the formula (I)

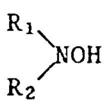

(I)

wherein $R_1$ and $R_2$ are independently dodecyl, tetradecyl, hexadecyl, heptadecyl or octadecyl, characterized in that the organic material is a poly(arylene sulfide) resin, a modified polystyrene or a polymer containing a diene component.

2. A composition according to claim 1 wherein $R_1$ and $R_2$ are each dodecyl, tetradecyl, hexadecyl or octadecyl.

3. A composition according to claim 1 wherein $R_1$ is hexadecyl and $R_2$ is tetradecyl, heptadecyl or octadecyl.

4. A composition according to claim 1 wherein $R_1$ is heptadecyl and $R_2$ is octadecyl.

5. A composition according to claim 1 wherein $R_1$ and $R_2$ are octadecyl.

6. A composition according to claim 1 wherein $R_1$ and $R_2$ are the alkyl mixture found in di(hydrogenated tallow) amine.

7. A composition according to claim 1 therein the poly(arylene sulfide) resin is poly(p-phenylene sulfide).

8. A composition according to claim 1 wherein the modified polystyrene is impact polystyrene (IPS).

9. A composition according to claim 1 wherein the polymer containing a diene component is an elastomer.

10. A composition according to claim 9 wherein the elastomer is polybutadiene, polyisoprene, ethylene/propylene/diene terpolymer, isoprene/isobutylene copolymer or acrylonitrile/butadiene copolymer.

11. A composition according to claim 9 wherein the elastomer is polybutadiene.

12. A composition according to claim 1 wherein the polymer containing a diene component is a styrene copolymer, a styrene block copolymer or a styrene terpolymer.

13. A composition according to claim 1 wherein the polymer containing a diene component is styrene/butadiene copolymer, styrene/butadiene block copolymer, styrene/isoprene copolymer, styrene/isoprene block copolymer or acrylonitrile/butadiene/styrene (ABS).

14. A composition according to claim 12 wherein the styrene block copolymer is a thermoplastic elastomer.

15. Use of a compound of the formula (I)

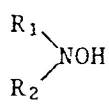 (I)

wherein $R_1$ and $R_2$ are independently dodecyl, tetradecyl, hexadecyl, heptadecyl or octadecyl, for stabilizing a poly(arylene sulfide) resin, a modified polystyrene or a polymer containing a diene component against thermal, oxidative or actinic degradation.

16. A process for the preparation of a compound of the formula (I)

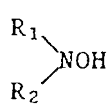 (I)

wherein $R_1$ and $R_2$ are independently alkyl of 8 to 36 carbon atoms, by reacting a compound of the formula (II)

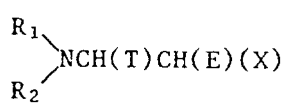 (II)

wherein $R_1$ and $R_2$ are as defined above, E is hydrogen, alkyl of 1 to 4 carbon atoms or ($C_1$-$C_{12}$alkyl)-oxycarbonylmethyl, X is ($C_1$-$C_{12}$alkyl)oxycarbonyl, -CN, -$CONR_3R_4$,

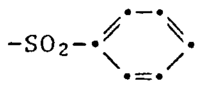

or $-PO(OC_2H_5)_2$, where $R_3$ and $R_4$ are independently hydrogen or alkyl of 1 to 4 carbon atoms, and T is hydrogen or ($C_1$-$C_{12}$alkyl)oxycarbonyl, or T and X together are -CO-N(L)-CO- where L is hydrogen, alkyl of 1 to 4 carbon atoms or phenyl, with an aqueous hydrogen peroxide solution at a temperature of 15° to 50°C to give the corresponding N-oxide of the formula (III)

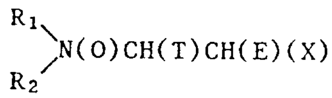

(III)

which undergoes the reverse Michael reaction in situ to give the compound of the formula (I) and the compound of the formula (IV),

TCH = C(E)(X)  (IV)

characterized in that the compound of the formula (II) is dissolved in a lower alkanol solvent and oxidized with a molar excess of a 10 to 70 % aqueous hydrogen peroxide solution and that the compound of the formula (I) precipitates from the aqueous lower alkanol reaction medium.

**17.** A process according to claim 16 wherein T is hydrogen, E is hydrogen and X is ($C_1$-$C_8$alkyl)-oxycarbonyl.

**18.** A process according to claim 16 which is carried out at ambient temperature.

**19.** A process according to claim 16 which is carried out at 23° to 25°C.

**20.** A process according to claim 16 wherein a 50 to 70 % aqueous hydrogen peroxide solution is used as an oxidant.

**21.** A process according to claim 16 wherein the lower alkanol solvent is n-butanol.

**22.** A process for the preparation of a compound of the formula (I)

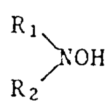

(I)

wherein $R_1$ and $R_2$ are independently alkyl of 8 to 36 carbon atoms, by oxidizing a compound of the formula (V)

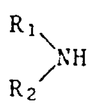

(V)

wherein $R_1$ and $R_2$ are as defined above, with an aqueous hydrogen peroxide solution at a temperature of 40° to 65°C, characterized in that the compound of the formula (V) is dissolved in a lower alkanol solvent and oxidized with a molar excess of a 10 to 70 % aqueous hydrogen peroxide solution and that the compound of the formula (I) precipitates from the aqueous lower alkanol reaction medium.

**23.** A process according to claim 22 which is carried out at 50° to 60°C.

**24.** A process according to claim 22 wherein a 50 to 70 % aqueous hydrogen peroxide solution is used as an oxidant.

**25.** A process according to claim 22 wherein the lower alkanol solvent is n-butanol or tert-butanol.

**Claims for the following Contracting State : ES**

**1.** A composition comprising an organic material subject to thermal, oxidative or actinic degradation and at least one compound of the formula (I)

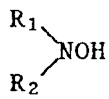

(I)

wherein $R_1$ and $R_2$ are independently dodecyl, tetradecyl, hexadecyl, heptadecyl or octadecyl, characterized in that the organic material is a poly(arylene sulfide) resin, a modified polystyrene or a polymer containing a diene component.

**2.** A composition according to claim 1 wherein $R_1$ and $R_2$ are each dodecyl, tetradecyl, hexadecyl or octadecyl.

**3.** A composition according to claim 1 wherein $R_1$ is hexadecyl and $R_2$ is tetradecyl, heptadecyl or octadecyl.

**4.** A composition according to claim 1 wherein $R_1$ is heptadecyl and $R_2$ is octadecyl.

**5.** A composition according to claim 1 wherein $R_1$ and $R_2$ are octadecyl.

**6.** A composition according to claim 1 wherein $R_1$ and $R_2$ are the alkyl mixture found in di(hydrogenated tallow) amine.

**7.** A composition according to claim 1 wherein the poly(arylene sulfide) resin is poly(p-phenylene sulfide).

**8.** A composition according to claim 1 wherein the modified polystyrene is impact polystyrene (IPS).

**9.** A composition according to claim 1 wherein the polymer containing a diene component is an elastomer.

**10.** A composition according to claim 9 wherein the elastomer is polybutadiene, polyisoprene, ethylene/propylene/diene terpolymer, isoprene/isobutylene copolymer or acrylonitrile/butadiene copolymer.

**11.** A composition according to claim 9 wherein the elastomer is polybutadiene.

**12.** A composition according to claim 1 wherein the polymer containing a diene component is a styrene copolymer, a styrene block copolymer or a styrene terpolymer.

**13.** A composition according to claim 1 wherein the polymer containing a diene component is styrene/butadiene copolymer, styrene/butadiene block copolymer, styrene/isoprene copolymer, styrene/isoprene block copolymer or acrylonitrile/butadiene/styrene (ABS).

**14.** A composition according to claim 12 wherein the styrene block copolymer is a thermoplastic elastomer.

**15.** A method for stabilizing a poly(arylene sulfide) resin, a modified polystyrene or a polymer containing a diene component against thermal, oxidative or actinic degradation, which comprises incorporating into the material to be stabilized at least one compound of the formula (I)

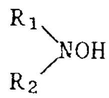

(I)

wherein $R_1$ and $R_2$ are independently dodecyl, tetradecyl, hexadecyl, heptadecyl or octadecyl.

**16.** A process for the preparation of a compound of the formula (I)

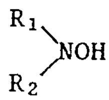

(I)

wherein $R_1$ and $R_2$ are independently alkyl of 8 to 36 carbon atoms, by reacting a compound of the formula (II)

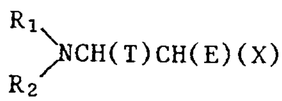

(II)

wherein $R_1$ and $R_2$ are as defined above, E is hydrogen, alkyl of 1 to 4 carbon atoms or ($C_1$-$C_{12}$alkyl)-oxycarbonylmethyl, X is ($C_1$-$C_{12}$alkyl)oxycarbonyl, -CN, -$CONR_3R_4$,

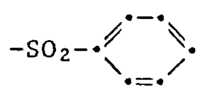

or -$PO(OC_2H_5)_2$, where $R_3$ and $R_4$ are independently hydrogen or alkyl of 1 to 4 carbon atoms, and T is hydrogen or ($C_1$-$C_{12}$alkyl)oxycarbonyl, or T and X together are -CO-N(L)-CO- where L is hydrogen, alkyl of 1 to 4 carbon atoms or phenyl, with an aqueous hydrogen peroxide solution at a temperature of 15° to 50°C to give the corresponding N-oxide of the formula (III)

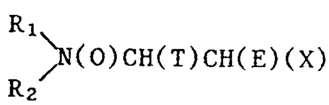

(III)

which undergoes the reverse Michael reaction in situ to give the compound of the formula (I) and the compound of the formula (IV),

TCH = C(E)(X)    (IV)

characterized in that the compound of the formula (II) is dissolved in a lower alkanol solvent and oxidized with a molar excess of a 10 to 70 % aqueous hydrogen peroxide solution and that the compound of the formula (I) precipitates from the aqueous lower alkanol reaction medium.

**17.** A process according to claim 16 wherein T is hydrogen, E is hydrogen and X is ($C_1$-$C_8$alkyl)-oxycarbonyl.

**18.** A process according to claim 16 which is carried out at ambient temperature.

**19.** A process according to claim 16 which is carried out at 23° to 25°C.

**20.** A process according to claim 16 wherein a 50 to 70 % aqueous hydrogen peroxide solution is used as an oxidant.

**21.** A process according to claim 16 wherein the lower alkanol solvent is n-butanol.

**22.** A process for the preparation of a compound of the formula (I)

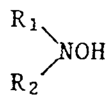

(I)

wherein $R_1$ and $R_2$ are independently alkyl of 8 to 36 carbon atoms, by oxidizing a compound of the formula (V)

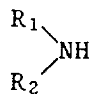

(V)

wherein $R_1$ and $R_2$ are as defined above, with an aqueous hydrogen peroxide solution at a temperature of 40° to 65°C, characterized in that the compound of the formula (V) is dissolved in a lower alkanol solvent and oxidized with a molar excess of a 10 to 70 % aqueous hydrogen peroxide solution and that the compound of the formula (I) precipitates from the aqueous lower alkanol reaction medium.

**23.** A process according to claim 22 which is carried out at 50° to 60°C.

**24.** A process according to claim 22 wherein a 50 to 70 % aqueous hydrogen peroxide solution is used as an oxidant.

**25.** A process according to claim 22 wherein the lower alkanol solvent is n-butanol or tert-butanol.

**Patentansprüche**
**Patentansprüche für folgende Vertragsstaaten : BE, CH, DE, FR, GB, IT, LI, NL**

**1.** Zusammensetzung, umfassend ein organisches Material, das thermischem, oxidativem oder durch harte Strahlung hervorgerufenem Abbau unterliegt und mindestens eine Verbindung der Formel (I)

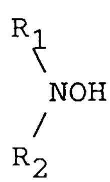

(I)

worin $R_1$ und $R_2$ unabhängig voneinander Dodecyl, Tetradecyl, Hexadecyl, Heptadecyl oder Octadecyl darstellen, dadurch gekennzeichnet, daß das organische Material ein Poly(arylensulfid)harz, ein modifiziertes Polystyrol oder ein Polymer, enthaltend eine Dienkomponente, ist.

**2.** Zusammensetzung nach Anspruch 1, worin $R_1$ und $R_2$ jeweils Dodecyl, Tetradecyl, Hexadecyl oder Octadecyl darstellen.

**3.** Zusammensetzung nach Anspruch 1, worin $R_1$ Hexadecyl ist und $R_2$ Tetradecyl, Heptadecyl oder Octadecyl ist.

**4.** Zusammensetzung nach Anspruch 1, worin $R_1$ Heptadecyl ist und $R_2$ Octadecyl ist.

**5.** Zusammensetzung nach Anspruch 1, worin $R_1$ und $R_2$ Octadecyl darstellen.

6. Zusammensetzung nach Anspruch 1, worin $R_1$ und $R_2$ das Alkylgemisch, das in Di(hydriertem Talg)-amin gefunden wird, darstellen.

7. Zusammensetzung nach Anspruch 1, wobei das Poly(arylensulfid)harz Poly(p-phenylensulfid) ist.

8. Zusammensetzung nach Anspruch 1, wobei das modifizierte Polystyrol schlagfestes Polystyrol (IPS) ist.

9. Zusammensetzung nach Anspruch 1, wobei das Polymer, enthaltend eine Dienkomponente, ein Elastomer ist.

10. Zusammensetzung nach Anspruch 9, wobei das Elastomer Polybutadien, Polyisopren, Ethylen/Propylen/Dienterpolymer, Isopren/Isobutylencopolymer oder Acrylnitril/Butadiencopolymer darstellt.

11. Zusammensetzung nach Anspruch 9, wobei das Elastoner Polybutadien ist.

12. Zusammensetzung nach Anspruch 1, wobei das Polymer, enthaltend eine Dienkomponente, ein Styrolcopolymer, ein Styrolblockcopolymer oder ein Styrolterpolymer ist.

13. Zusammensetzung nach Anspruch 1, wobei das Polymer, enthaltend eine Dienkomponente, ein Styrol/Butadiencopolymer, Styrol/Butadienblockcopolymer, Styrol/Isoprencopolymer, Styrol/Isoprenblockcopolymer oder Acrylnitril/Butadien/Styrol (ABS) ist.

14. Zusammensetzung nach Anspruch 12, wobei das Styrolblockcopolymer ein thermoplastisches Elastomer ist.

15. Verwendung einer Verbindung der Formel (I)

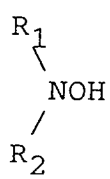

(I)

worin $R_1$ und $R_2$ unabhängig voneinander Dodecyl, Tetradecyl, Hexadecyl, Heptadecyl oder Octadecyl darstellen, zur Stabilisierung eines Poly(arylensulfid)harzes, eines modifizierten Polystyrols oder eines Polymers, enthaltend eine Dienkomponente, gegen thermischen, oxidativen oder durch harte Strahlung hervorgerufenen Abbau.

16. Verfahren zur Herstellung einer Verbindung der Formel (I)

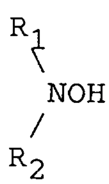

(I)

worin $R_1$ und $R_2$ unabhängig voneinander Alkyl mit 8 bis 36 Kohlenstoffatomen darstellen, durch Umsetzen einer Verbindung der Formel (II)

```
R1
  \
   NCH(T)CH(E)(X)          (II)
  /
R2
```

worin $R_1$ und $R_2$ wie vorstehend definiert sind, E Wasserstoff, Alkyl mit 1 bis 4 Kohlenstoffatomen oder ($C_1$-$C_{12}$-Alkyl)oxycarbonylmethyl darstellt, X ($C_1$-$C_{12}$-Alkyl)oxycarbonyl, -CN, -$CONR_3R_4$,

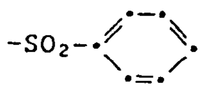

oder -$PO(OC_2H_5)_2$ darstellt, worin $R_3$ und $R_4$ unabhängig Wasserstoff oder Alkyl mit 1 bis 4 Kohlenstoffatomen sind und T Wasserstoff oder ($C_1$-$C_{12}$-Alkyl)oxycarbonyl darstellt oder T und X zusammen -CO-N(L)-CO- bedeuten, worin L Wasserstoff, Alkyl mit 1 bis 4 Kohlenstoffatomen oder Phenyl bedeutet, mit einer wässerigen Wasserstoffperoxidlösung bei einer Temperatur von 15° bis 50°C zu dem entsprechenden N-Oxid der Formel (III)

```
R1
  \
   N(O)CH(T)CH(E)(X)          (III)
  /
R2
```

das eine umgekehrte Michael-Reaktion in situ eingeht, zu der Verbindung der Formel (I) und der Verbindung der Formel (IV),

TCH = C(E)(X)    (IV)

dadurch gekennzeichnet, daß die Verbindung der Formel (II) in einem Niederalkanollösungsmittel gelöst wird und mit einem molaren Überschuß einer 10 bis 70 %-igen wässerigen Wasserstoffperoxidlösung oxidiert wird und daß die Verbindung der Formel (I) aus dem wässerigen Niederalkanolreaktionsmedium ausfällt.

**17.** Verfahren nach Anspruch 16, wobei T Wasserstoff darstellt, E Wasserstoff darstellt und X ($C_1$-$C_8$-Alkyl)-oxycarbonyl darstellt.

**18.** Verfahren nach Anspruch 16, das bei Raumtemperatur ausgeführt wird.

**19.** Verfahren nach Anspruch 16, das bei 23° bis 25°C ausgeführt wird.

**20.** Verfahren nach Anspruch 16, wobei eine 50 bis 70 %-ige wässerige Wasserstoffperoxidlösung als ein Oxidationsmittel verwendet wird.

**21.** Verfahren nach Anspruch 16, wobei das Niederalkanollösungsmittel n-Butanol ist.

**22.** Verfahren zur Herstellung einer Verbindung der Formel (I)

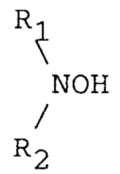

(I)

worin $R_1$ und $R_2$ unabhängig voneinander Alkyl mit 8 bis 36 Kohlenstoffatomen darstellen, durch Oxidieren einer Verbindung der Formel (V)

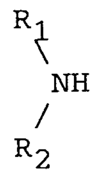

(V)

worin $R_1$ und $R_2$ wie vorstehend definiert sind, mit einer wässerigen Wasserstoffperoxidlösung bei einer Temperatur von 40° bis 65°C, dadurch gekennzeichnet, daß die Verbindung der Formel (V) in einem Niederalkanollösungsmittel gelöst wird und mit einem molaren Überschuß einer 10 bis 70 %-igen wässerigen Wasserstoffperoxidlösung oxidiert wird und daß die Verbindung der Formel (I) aus dem wässerigen Niederalkanolreaktionsmedium ausfällt.

**23.** Verfahren nach Anspruch 22, das bei 50° bis 60°C ausgeführt wird.

**24.** Verfahren nach Anspruch 22, wobei eine 50 bis 70 %-ige wässerige Wasserstoffperoxidlösung als ein Oxidationsmittel verwendet wird.

**25.** Verfahren nach Anspruch 22, wobei das Niederalkanollösungsmittel n-Butanol oder tert.-Butanol ist.

**Patentansprüche für folgenden Vertragsstaat : ES**

**1.** Zusammensetzung, umfassend ein organisches Material, das thermischem, oxidativem oder durch harte Strahlung hervorgerufenem Abbau unterliegt und mindestens eine Verbindung der Formel (I)

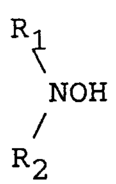

(I)

worin $R_1$ und $R_2$ unabhängig voneinander Dodecyl, Tetradecyl, Hexadecyl, Heptadecyl oder Octadecyl darstellen, dadurch gekennzeichnet, daß das organische Material ein Poly(arylensulfid)harz, ein modifiziertes Polystyrol oder ein Polymer, enthaltend eine Dienkomponente, ist.

**2.** Zusammensetzung nach Anspruch 1, worin $R_1$ und $R_2$ jeweils Dodecyl, Tetradecyl, Hexadecyl oder Octadecyl darstellen.

**3.** Zusammensetzung nach Anspruch 1, worin $R_1$ Hexadecyl ist und $R_2$ Tetradecyl, Heptadecyl oder Octadecyl ist.

**4.** Zusammensetzung nach Anspruch 1, worin $R_1$ Heptadecyl ist und $R_2$ Octadecyl ist.

**5.** Zusammensetzung nach Anspruch 1, worin $R_1$ und $R_2$ Octadecyl darstellen.

**6.** Zusammensetzung nach Anspruch 1, worin $R_1$ und $R_2$ das Alkylgemisch, das in Di(hydriertem Talg)-amin gefunden wird, darstellen.

**7.** Zusammensetzung nach Anspruch 1, wobei das Poly(arylensulfid)harz Poly(p-phenylensulfid) ist.

**8.** Zusammensetzung nach Anspruch 1, wobei das modifizierte Polystyrol schlagfestes Polystyrol (IPS) ist.

**9.** Zusammensetzung nach Anspruch 1, wobei das Polymer, enthaltend eine Dienkomponente, ein Elastomer ist.

**10.** Zusammensetzung nach Anspruch 9, wobei das Elastomer Polybutadien, Polyisopren, Ethylen/Propylen/Dienterpolymer, Isopren/Isobutylencopolymer oder Acrylnitril/Butadiencopolymer darstellt.

**11.** Zusammensetzung nach Anspruch 9, wobei das Elastomer Polybutadien ist.

**12.** Zusammensetzung nach Anspruch 1, wobei das Polymer, enthaltend eine Dienkomponente, ein Styrolcopolymer, ein Styrolblockcopolymer oder ein Styrolterpolymer ist.

**13.** Zusammensetzung nach Anspruch 1, wobei das Polymer, enthaltend eine Dienkomponente, ein Styrol/Butadiencopolymer, Styrol/Butadienblockcopolymer, Styrol/Isoprencopolymer, Styrol/Isoprenblockcopolymer oder Acrylnitril/Butadien/Styrol (ABS) ist.

**14.** Zusammensetzung nach Anspruch 12, wobei das Styrolblockcopolymer ein thermoplastisches Elastomer ist.

**15.** Verfahren zur Stabilisierung eines Poly(arylensulfid)harzes, eines modifizierten Polystyrols oder eines Polymers, enthaltend eine Dienkomponente, gegen thermischen, oxidativen oder durch harte Strahlung hervorgerufenen Abbau, umfassend Einmischen in das zu stabilisierende Material, mindestens einer Verbindung der Formel (I)

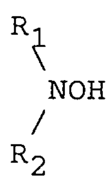

(I)

worin $R_1$ und $R_2$ unabhängig voneinander Dodecyl, Tetradecyl, Hexadecyl, Heptadecyl oder Octadecyl darstellen.

**16.** Verfahren zur Herstellung einer Verbindung der Formel (I)

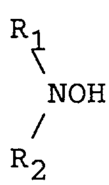

(I)

worin $R_1$ und $R_2$ unabhängig voneinander Alkyl mit 8 bis 36 Kohlenstoffatomen darstellen, durch Umsetzen einer Verbindung der Formel (II)

$$\begin{array}{l} R_1 \\ \quad\backslash \\ \quad NCH(T)CH(E)(X) \qquad\qquad (II) \\ \quad / \\ R_2 \end{array}$$

worin $R_1$ und $R_2$ wie vorstehend definiert sind, E Wasserstoff, Alkyl mit 1 bis 4 Kohlenstoffatomen oder ($C_1$-$C_{12}$-Alkyl)oxycarbonylmethyl darstellt, X ($C_1$-$C_{12}$-Alkyl)oxycarbonyl, -CN, -$CONR_3R_4$,

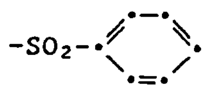

oder -$PO(OC_2H_5)_2$ darstellt, worin $R_3$ und $R_4$ unabhängig Wasserstoff oder Alkyl mit 1 bis 4 Kohlenstoffatomen sind und T Wasserstoff oder ($C_1$-$C_{12}$-Alkyl)oxycarbonyl darstellt oder T und X zusammen -CO-N(L)-CO- bedeuten, worin L Wasserstoff, Alkyl mit 1 bis 4 Kohlenstoffatomen oder Phenyl bedeutet, mit einer wässerigen Wasserstoffperoxidlösung bei einer Temperatur von 15° bis 50°C zu dem entsprechenden N-Oxid der Formel (III)

$$\begin{array}{l} R_1 \\ \quad\backslash \\ \quad N(O)CH(T)CH(E)(X) \qquad\qquad (III) \\ \quad / \\ R_2 \end{array}$$

das eine umgekehrte Michael-Reaktion in situ eingeht, zu der Verbindung der Formel (I) und der Verbindung der Formel (IV),

TCH = C(E)(X)  (IV)

dadurch gekennzeichnet, daß die Verbindung der Formel (II) in einem Niederalkanollösungsmittel gelöst wird und mit einem molaren Überschuß einer 10 bis 70 %-igen wässerigen Wasserstoffperoxidlösung oxidiert wird und daß die Verbindung der Formel (I) aus dem wässerigen Niederalkanolreaktionsmedium ausfällt.

**17.** Verfahren nach Anspruch 16, wobei T Wasserstoff darstellt, E Wasserstoff darstellt und X ($C_1$-$C_8$-Alkyl)-oxycarbonyl darstellt.

**18.** Verfahren nach Anspruch 16, das bei Raumtemperatur ausgeführt wird.

**19.** Verfahren nach Anspruch 16, das bei 23° bis 25°C ausgeführt wird.

**20.** Verfahren nach Anspruch 16, wobei eine 50 bis 70 %-ige wässerige Wasserstoffperoxidlösung als ein Oxidationsmittel verwendet wird.

**21.** Verfahren nach Anspruch 16, wobei das Niederalkanollösungsmittel n-Butanol ist.

22. Verfahren zur Herstellung einer Verbindung der Formel (I)

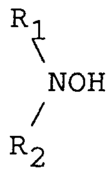

(I)

worin $R_1$ und $R_2$ unabhängig voneinander Alkyl mit 8 bis 36 Kohlenstoffatomen darstellen, durch Oxidieren einer Verbindung der Formel (V)

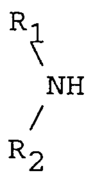

(V)

worin $R_1$ und $R_2$ wie vorstehend definiert sind, mit einer wässerigen Wasserstoffperoxidlösung bei einer Temperatur von 40° bis 65°C, dadurch gekennzeichnet, daß die Verbindung der Formel (V) in einem Niederalkanollösungsmittel gelöst wird und mit einem molaren Überschuß einer 10 bis 70 %-igen wässerigen Wasserstoffperoxidlösung oxidiert wird und daß die Verbindung der Formel (I) aus dem wässerigen Niederalkanolreaktionsmedium ausfällt.

23. Verfahren nach Anspruch 22, das bei 50° bis 60°C ausgeführt wird.

24. Verfahren nach Anspruch 22, wobei eine 50 bis 70 %-ige wässerige Wasserstoffperoxidlösung als ein Oxidationsmittel verwendet wird.

25. Verfahren nach Anspruch 22, wobei das Niederalkanollösungsmittel n-Butanol oder tert.-Butanol ist.

**Revendications**

**Revendications pour les Etats contractants suivants : BE, CH, DE, FR, GB, IT, LI, NL**

1. Composition comprenant un matériau organique sujet à une dégradation thermique, oxydante ou actinique et au moins un composé de formule (I)

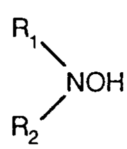

(I)

dans laquelle $R_1$ et $R_2$ sont indépendamment l'un de l'autre, un dodécyle, un tétradécyle, un hexadécyle, un heptadécyle ou un octadécyle, caractérisé en ce que le matériau organique est une résine de poly(sulfure d'arylène), un polystyrène modifié ou un polymère contenant un composant diène.

2. Composition selon la revendication 1 dans laquelle $R_1$ et $R_2$ sont chacun un dodécyle, un tétradécyle, un hexadécyle ou un octadécyle.

3. Composition selon la revendication 1 dans laquelle $R_1$ est un hexadécyle et $R_2$ est un tétradécyle, un heptadécyle ou un octadécyle.

**4.** Composition selon la revendication 1 dans laquelle $R_1$ est un heptadécyle et $R_2$ est un cctadécyle.

**5.** Composition selon la revendication 1 dans laquelle $R_1$ et $R_2$ sont un octadécyle.

**6.** Composition selon la revendication 1 dans laquelle $R_1$ et $R_2$ sont le melange d'alkyles trouvé dans la di(alkyle de suif hydrogéné) amine.

**7.** Composition selon la revendication 1 dans laquelle la résine de poly(sulfure d'arylène) est le poly-(sulfure de p-phénylène).

**8.** Composition selon la revendication 1 dans laquelle le polystyrène modifié est un polystyrène choc (IPS).

**9.** Composition selon la revendication 1 dans laquelle le polymère contenant un composant diène est un élastomère.

**10.** Composition selon la revendication 9 dans laquelle l'élastomère est un polybutadiène, un polyisoprène, un terpolymère éthylène/propylène/diène, un copolymère isoprène/isobutylène ou un copolymère acrylonitrile/butadiène.

**11.** Composition selon la revendication 9 dans laquelle l'élastomère est un polybutadiène.

**12.** Composition selon la revendication 1 dans laquelle le polymère contenant un composant diène est un copolymère de styrène, un copolymère séquencé de styrène, ou un terpolymère de styrène.

**13.** Composition selon la revendication 1 dans laquelle le polymère contenant un composant diène est un copolymère styrène/butadiène, un copolymère séquencé styrène/butadiène, un copolymère styrène/isoprène, un copolymère séquencé styrène/isoprène ou un acrylonitrile/butadiène/styrène (ABS).

**14.** Composition selon la revendication 12 dans laquelle le copolymère séquencé de styrène est un élastomère thermoplastique.

**15.** Utilisation d'un composé de formule (I)

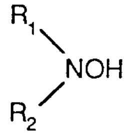

(I)

dans laquelle $R_1$ et $R_2$ sont, indépendamment l'un de l'autre, un dodécyle, un tétradécyle, un hexadécyle, un heptadécyle ou un octadécyle, pour la stabilisation d'une résine de poly(sulfure d'arylène), d'un polystyrène modifié ou d'un polymère contenant un composant diène contre une dégradation thermique, oxydante ou actinique.

**16.** Procédé pour la préparation d'un composé de formule (I)

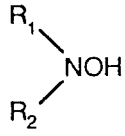

(I)

dans laquelle $R_1$ et $R_2$ sont, indépendamment l'un de l'autre, un alkyle de 8 à 36 atomes de carbone, selon lequel on fait réagir un composé de formule (II)

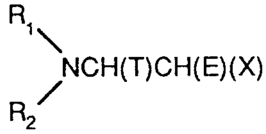

(II)

dans laquelle $R_1$ et $R_2$ sont définis ci-dessus, E est un hydrogène, un alkyle de 1 à 4 atomes de carbone ou un (alkyle en $C_1$-$C_{12}$)oxycarbonylméthyle, X est un (alkyle en $C_1$-$C_{12}$)oxycarbonyle, un —CN, un —$CONR_3R_4$, un

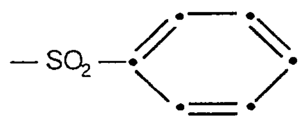

ou un —$PO(OC_2H_5)_2$, dans lequel $R_3$ et $R_4$ sont, indépendamment l'un de l'autre, un hydrogène ou un alkyle de 1 à 4 atomes de carbone, et T est un hydrogène ou un (alkyle en $C_1$-$C_{12}$)oxycarbonyle, ou T et X sont ensembles un —CO—N(L)—CO— dans lequel L est un hydrogène, un alkyle de 1 à 4 atomes de carbone ou un phényle, avec une solution aqueuse de peroxyde d'hydrogène à une température de 15° à 50°C pour donner le N-oxyde correspondant de formule (III)

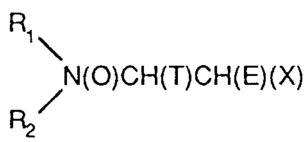

(III)

lequel est soumis à la réaction inverse de Michael in situ pour donner le composé de formule (I) et le composé de formule (IV),

TCH = C(E)(X) (IV)

caractérisé en ce que le composé de formule (II) est dissout dans un solvant de type alcanol inférieur et est oxydé avec un excès molaire d'une solution aqueuse de peroxyde d'hydrogène à 10 à 70 % et le composé de formule (I) précipite dans le milieu réactionnel à base d'alcanol inférieur aqueux.

**17.** Procédé selon la revendication 16 dans laquelle T est un hydrogène, E est un hydrogène et X est un (alkyle en $C_1$-$C_8$)oxycarbonyle.

**18.** Procédé selon la revendication 16 qui est réalisé à température ambiante.

**19.** Procédé selon la revendication 16 qui est réalisé à une température de 23° à 25°C.

**20.** Procédé selon la revendication 16 dans lequel une solution aqueuse de peroxyde d'hydrogène à une concentration comprise entre 50 et 70 % est utilisée en tant qu'oxydant.

**21.** Procédé selon la revendication 16 dans lequel le solvant de type alcanol inférieur est le n-butanol.

**22.** Procédé pour la préparation d'un composé de formule (I)

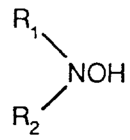

(I)

dans laquelle $R_1$ et $R_2$ sont, indépendamment l'un de l'autre, un alkyle de 8 à 36 atomes de carbone, en oxydant un composé de formule (V)

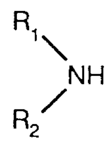

(V)

dans laquelle $R_1$ et $R_2$ sont tels que défini ci-dessus, avec une solution aqueuse de peroxyde d'hydrogène à une température de 40° à 65°C, caractérisé en ce que le composé de formule (V) est dissout dans un solvant de type alcanol inférieur et est oxydé avec un excès molaire d'une solution aqueuse de peroxyde d'hydrogène à une concentration de 10 à 70 % et en ce que le composé de formule (I) précipite dans le milieu réactionnel à base d'alcanol inférieur aqueux.

**23.** Procédé selon la revendication 22 qui est réalisé à une température de 50 à 60°C.

**24.** Procédé selon la revendication 22 dans lequel une solution aqueuse de peroxyde d'hydrogène à une concentration de 50 à 70 % est utilisée en tant qu'oxydant

**25.** Procédé selon la revendication 22 dans lequel le solvant de type alcanol inférieur est le n-butanol ou le tert-butanol.

**Revendications pour l'Etat contractant suivant : ES**

**1.** Composition comprenant un matériau organique sujet à une dégradation thermique, oxydante ou actinique et au moins un composé de formule (I)

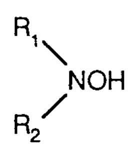

(I)

dans laquelle $R_1$ et $R_2$ sont indépendamment l'un de l'autre, un dodécyle, un tétradécyle, un hexadécyle, un heptadécyle ou un octadécyle, caractérisé en ce que le matériau organique est une résine de poly(sulfure d'arylène), un polystyrène modifié ou un polymère contenant un composant diène.

**2.** Composition selon la revendication 1 dans laquelle $R_1$ et $R_2$ sont chacun un dodécyle, un tétradécyle, un hexadécyle ou un octadécyle.

**3.** Composition selon la revendication 1 dans laquelle $R_1$ est un hexadécyle et $R_2$ est un tétradécyle, un heptadécyle ou un octadécyle.

**4.** Composition selon la revendication 1 dans laquelle $R_1$ est un heptadécyle et $R_2$ est un octadécyle.

**5.** Composition selon la revendication 1 dans laquelle $R_1$ et $R_2$ sont un octadécyle.

6. Composition selon la revendication 1 dans laquelle $R_1$ et $R_2$ sont le mélange d'alkyles trouvé dans la di(alkyle de suif hydrogéné) amine.

7. Composition selon la revendication 1 dans laquelle la résine de poly(sulfure d'arylène) est le poly-(sulfure de p-phénylène.

8. Composition selon la revendication 1 dans laquelle le polystyrène modifié est un polystyrène choc (IPS).

9. Composition selon la revendication 1 dans laquelle le polymère contenant un composant diène est un élastomère.

10. Composition selon la revendication 9 dans laquelle l'élastomère est un polybutadiène, un polyisoprène, un terpolymère éthylène/propylène/diène, un copolymère isoprène/isobutylène ou un copolymère acrylonitrile/butadiène.

11. Composition selon la revendication 9 dans laquelle l'élastomère est un polybutadiène.

12. Composition selon la revendication 1 dans laquelle le polymère contenant un composant diène est un copolymère de styrène, un copolymère séquencé de styrène, ou un terpolymère de styrène.

13. Composition selon la revendication 1 dans laquelle le polymère contenant un composant diène est un copolymère styrène/butadiène, un copolymère séquencé styrène/butadiène, un copolymère styrène/isoprène, un copolymère séquencé styrène/isoprène ou un acrylonitrile)butadiène/styrène (ABS).

14. Composition selon la revendication 12 dans laquelle le copolymère séquencé de styrène est un élastomère thermoplastique.

15. Méthode de stabilisation d'une résine de poly(sulfure d'arylène), d'un polystyrène modifié ou d'un polymère contenant un composant diène contre une dégradation thermique, oxydante ou actinique, qui comprend l'incorporation dans le matériau devant être stabilisé d'au moins un composé de formule (I)

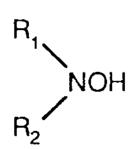

(I)

dans laquelle $R_1$ et $R_2$ sont, indépendamment l'un de l'autre, un dodécyle, un tétradécyle, un hexadécyle, un heptadécyle ou un octadécyle.

16. Procédé pour la préparation d'un composé de formule (I)

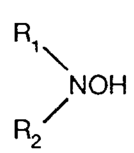

(I)

dans laquelle $R_1$ et $R_2$ sont, indépendamment l'un de l'autre, un alkyle de 8 à 36 atomes de carbone, selon lequel on fait réagir un composé de formule (II)

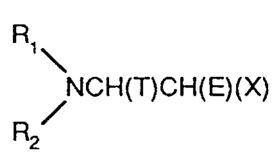

(II)

dans laquelle $R_1$ et $R_2$ sont définis ci-dessus, E est un hydrogène, un alkyle de 1 à 4 atomes de carbone ou un (alkyle en $C_1$-$C_{12}$)oxycarbonylméthyle, X est un (alkyle en $C_1$-$C_{12}$)oxycarbonyle, un —CN, un —$CONR_3R_4$, un

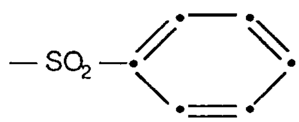

ou un —$PO(OC_2H_5)_2$, dans lequel $R_3$ et $R_4$ sont, indépendamment l'un de l'autre, un hydrogène ou un alkyle de 1 à 4 atomes de carbone, et T est un hydrogène ou un (alkyle en $C_1$-$C_{12}$)oxycarbonyle, ou T et X sont ensembles un —CO—N(L)—CO— dans lequel L est un hydrogène, un alkyle de 1 à 4 atomes de carbone ou un phényle, avec une solution aqueuse de peroxyde d'hydrogène à une température de 15° à 50°C pour donner le N-oxyde correspondant de formule (III)

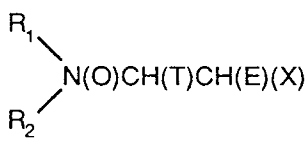
(III)

lequel est soumis à la réaction inverse de Michael in situ pour donner le composé de formule (I) et le composé de formule (IV),

TCH = C(E)(X)   (IV)

caractérise en ce que le composé de formule (II) est dissout dans un solvant de type alcanol inférieur et est oxydé avec un excès molaire d'une solution aqueuse de peroxyde d'hydrogène à 10 à 70 % et le composé de formule (I) précipite dans le milieu réactionnel à base d'alcanol inférieur aqueux.

**17.** Procédé selon la revendication 16 dans laquelle T est un hydrogène, E est un hydrogène et X est un (alkyle en $C_1$-$C_8$)oxycarbonyle.

**18.** Procédé selon la revendication 16 qui est réalisé à température ambiante.

**19.** Procédé selon la revendication 16 qui est réalisé à une température de 23° à 25°C.

**20.** Procédé selon la revendication 16 dans lequel une solution aqueuse de peroxyde d'hydrogène à une concentration comprise entre 50 et 70 % est utilisée en tant qu'oxydant.

**21.** Procédé selon la revendication 16 dans lequel le solvant d'alcanol inférieur est le n-butanol.

**22.** Procédé pour la préparation d'un composé de formule (I)

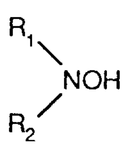
(I)

dans laquelle $R_1$ et $R_2$ sont, indépendamment l'un de l'autre, un alkyle de 8 à 36 atomes de carbone, en oxydant un composé de formule (V)

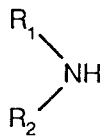

(V)

dans laquelle $R_1$ et $R_2$ sont tels que défini ci-dessus, avec une solution aqueuse de peroxyde d'hydrogène à une température de 40° à 65°C, caractérisé en ce que le composé de formule (V) est dissout dans un solvant de type alcanol inférieur et est oxydé avec un excès molaire d'une solution aqueuse de peroxyde d'hydrogène à une concentration de 10 à 70 % et en ce que le composé de formule (I) précipite dans le milieu réactionnel à base d'alcanol inférieur aqueux.

**23.** Procédé selon la revendication 22 qui est réalisé à une température de 50° à 60°C.

**24.** Procédé selon la revendication 22 dans lequel une solution aqueuse de peroxyde d'hydrogène à une concentration de 50 à 70 % est utilisée en tant qu'oxydant.

**25.** Procédé selon la revendication 22 dans lequel le solvant de type alcanol inférieur est le n-butanol ou le tert-butanol.